Europäisches Patentamt

(19) European Patent Office

Office européen des brevets

(11) Publication number: **0 005 987**
**B1**

(12) **EUROPEAN PATENT SPECIFICATION**

(45) Date of publication of patent specification: **02.09.81**

(21) Application number: **79300977.0**

(22) Date of filing: **29.05.79**

(51) Int. Cl.³: **E 21 D 21/00,
E 21 D 20/02, F 16 B 13/14**

(54) Cementitious cartridge for rock-bolting.

(30) Priority: **31.05.78 GB 2526978**

(43) Date of publication of application:
**12.12.79 Bulletin 79/25**

(45) Publication of the grant of the European patent:
**02.09.81 Bulletin 81/35**

(84) Designated Contracting States:
**AT CH DE FR GB IT SE**

(56) References cited:
**AT - B - 224 588
CH - A - 473 305
CH - A - 589 801
DE - A - 2 065 472
DE - A - 2 735 216
GB - A - 953 056
GB - A - 1 293 619
US - A - 3 324 662
US - A - 3 385 427
US - A - 4 126 003
US - A - 4 126 005
US - A - 4 126 009
US - A - 4 127 001**

(73) Proprietor: **EXCHEM HOLDINGS LIMITED
30, Cursitor Street
London EC4A 1HR (GB)**

(72) Inventor: **Murphy, John Michael
"Redlands" 44 Windsor Road
Mansfield Nottinghamshire (GB)**
Inventor: **Spensley, Robert Hardy
28 Broom Avenue
Swanwick Derbyshire (GB)**

(74) Representative: **Kosmin, Gerald Emmanuel et al,
HASELTINE, LAKE & CO. Hazlitt House 28
Southampton Buildings Chancery Lane
London, WC2A 1AT (GB)**

Courier Press, Leamington Spa, England.

### Cementitious cartridge for rock-bolting

This invention relates to the anchoring of a reinforcing element, such as a steel rock-bolt or wooden dowel, in a borehole drilled into rock strata, for example the roof of an underground mine, by means of a cementitious grouting system which is introduced into the borehole in the form of a cartridge and is activated *in situ* by contact with a reinforcing element so as rapidly to form a hardened cementitious grout in the annulus between the reinforcing element and the wall of the borehole, whereby the reinforcing member is firmly anchored in the borehole in as short a time as practicable.

For the last ten years or so, the most convenient and technically advantageous method of installing a reinforcing element in a rock borehole has relied upon the use of frangible resinous cartridges (see, for example, British Patent specification No. 953 056), one or more of which are inserted into and pushed to the end of the borehole, following which the reinforcing element is inserted whilst rotating into the borehole so as to break the cartridges and cause the contents thereof to become mixed, thereby forming a resinous grout around the reinforcing element in the borehole which anchors the element in the borehole. Such resinous cartridges are mostly filled with an unsaturated polyester resin system and a hardening (i.e. curing) agent therefor, the latter being kept separate from the unsaturated resin system, for example by use of a two compartment cartridge, until mixed by the action of the reinforcing element.

In certain areas of utilization, cartridges containing unsaturated polyester resin systems present hazards which have lately become of increasing concern. In particular, the low resistance to flammability and the toxicity of their combustion products make such resinous cartridges a source of danger when used or stored in restricted areas, such as in coal mines.

It has also previously been proposed (see, for example, British Patent Specification No. 953,056) to use a cementitious grout in the form of a frangible cartridge for securing an anchor bolt in an oversized borehole, the cartridge containing in one compartment a dry inorganic cement mortar (i.e. an hydraulic cement and sand) and in a second compartment embedded in the first a quantity of water which, when the cartridge is broken in a borehole, will mix with the dry cement mortar and cause it to become hydrated and consequently harden around the anchor bolt. Such frangible cementitious cartridges have not, however, achieved any appreciable commercial acceptance because of their unreliability which results from a number of factors:—

1. Mixing in-hole of the dry cement mortar and water is difficult so that the consistency and hence the strength of the mixed mortar varies along the length of the anchor bolt.

2. When a dry powder mix is wetted out there is a considerable contraction in volume arising from the void volume of the dry mix. Consequently, large voids are formed in the mortar-filled annulus between the anchor bolt and the borehole. Such voids are a source of weakness and may also permit subsequent corrosion of the material from which the bolt is formed.

3. Because of the mixing difficulty mentioned above, such cementitious cartridges are relatively difficult to penetrate with the bolt. Partially wetted mortar powder may form a hard plug which jams the bolt and prevents rotation. For short bolts installed with powerful drilling machines, this may not be a serious problem but for the majority of mine bolts and dowels, which are normally more than 1.5 metres in length and are installed with hand-held machines, it poses a major difficulty.

It is an object of the present invention to provide a frangible cartridge for use in rock-bolting which will avoid the flammability and/or toxicity hazards of the polyester-based resinous cartridges whilst at the same time avoiding the difficulties and consequent unreliability of the previously proposed cement-based cartridges.

According to the invention there is provided a cementitious cartridge for anchoring a reinforcing element in a borehole, the cartridge comprising an outer tubular frangible casing having disposed herein in separate compartments (A) a paste comprising a hydraulic substance and a non-aqueous water-miscible liquid which is inert with respect to the hydraulic substance and (B) an aqueous liquid capable of reacting with the hydraulic substance when brought into contact therewith so as to cause it to set to a hardened cementitious grout capable of anchoring the reinforcing element in the borehole.

In one embodiment of the invention, one of the compartments is formed by a longitudinally extending inner frangible casing which is disposed within the longitudinally extending frangible outer casing of the cartridge, the annular space between the inner casing and the outer casing forming the other compartment. Advantageously the inner compartment contains the aqueous liquid (B) and the outer compartment contains the paste (A).

The hydraulic substance may be a hydraulic cement, for example Portland cement, high alumina cement, dicalcium silicate or metallurgical slag, or a hydraulic solid such as, for example, calcium sulphate, gypsum plaster, or a metal oxide or hydroxide of, for example calcium, magnesium or iron, which is capable of setting to a hardened mass when mixed with phosphoric acid or a phosphate solution which can be present in the aqueous liquid (B). A mixture of two or more different hydraulic substances may be used.

The non-aqueous water-miscible liquid should be a water-soluble or water-dispersible substance which is compatible with the hardening process involving the hydraulic substance, i.e. the liquid should not interfere with the hardening process to prevent the cementitious mixture formed from paste (A) and liquid (B) from gaining sufficient strength, on setting, to be of practical use in the anchorage of reinforcing elements. When the cementitious cartridge of the invention is to be used in a coal mine, the non-aqueous liquid should preferably have a flash point in excess of 100°C. Non-aqueous liquids which have been found to be suitable for use in the cartridge of the invention are organic compounds, particularly those containing one or more hydroxyl groups, such as a polyol, or an ester or partial ester of such a compound. Thus the non-aqueous liquid can be, for example, glycerol or a glycol such as, for example, diethylene glycol, triethylene glycol, propylene glycol or polypropylene glycol. The ester or partial ester can be derived from a glycol, for example ethylene glycol monoacetate, diethylene glycol monoacetate, or triethylene glycol monoacetate. Preferably the ester or partial ester is one derived from glycerol and a lower aliphatic carboxylic acid, advantageously acetic acid, i.e. glycerol monoacetate (also known as monoacetin), glycerol 1,3-diacetate (diacetin) or glycerol triacetate (triacetin).

Either or both of the paste (A) and the aqueous liquid (B) may have incorporated therein substances to control the physical or chemical parameters of the cementitious mixture. Such additive substances may be water-soluble, for example calcium chloride, calcium formate, calcium acetate, barium chloride, magnesium chloride, aluminium chloride, ferric chloride, borax, alkali metal aluminate, alkali metal or ammonium phosphates or silicates, cellulose derivatives, natural gums or synthetic polymers, or water-insoluble, such as an inorganic filler, for example clays, silica, limestone, gypsum, anhydrite, or glass fibre.

If required, for example in coal mines, the flammability of the cementitious cartridge may be seen further reduced by incorporating, generally in paste (A), a fire-retardant additive, for example triammonium phosphate, tris-dichloropropyl phosphate, ammonium chloride, 1:1:1-trichloroethane, or antimony oxide in conjunction with a halogenated compound such as a chlorinated or brominated hydrocarbon. Fire retardancy of paste (A) may alternatively be achieved by using halogen-substituted derivatives of non-aqueous liquids used in forming paste (A).

In formulating components (A) and (B) of the cementitious cartridge of the invention, the proportions of the constituents may advantageously be as follows:

| Paste (A) | Parts by weight |
|---|---|
| Hydraulic substance | 50—85 |
| Non-aqueous liquid | 15—40 |
| Water-soluble additives | 0—20 |
| Water-insoluble additives | 0—85 |
| Component (B) | |
| Aqueous liquid | 20—50 |
| Water-soluble additives | 0—25 |
| Water-insoluble additives | 0—200 |

To reduce the exudation of liquid from the cementitious mixture on setting, a substance such as, for example, glycerol can advantageously be incorporated in the paste (A) and/or in the liquid (B).

The cementitious cartridge of the invention may be manufactured using a variety of suitable casing materials. To some extent the choice of casing material is dependent upon the relative arrangement of the components A and B within the cartridge. Component A is anhydrous but may contain relatively strong solvent materials, whereas component B is aqueous. Consequently it is possible to use materials such as polyethylene or other polyolefines, polyesters or suitable thermoplastic laminate materials as the frangible casing for component B and certain of these materials also for the frangible casing for component A. Alternatively component A may be packaged in a water-sensitive material such as vegetable parchment, regenerated cellulose, collagen or a similar casing commonly used in the food industry. Thus, in the embodiment where component B is in the inner part of the cartridge and component A is in the outer part, a preferred arrangement consists of an inner tube of high density polyethylene tubing and an outer casing of viscose treated paper. If the components are reversed, so that component B is in the outer part of the cartridge and component A within the inner tube, it is then necessary to use water resisting casings in both cases, since both casings will be in contact with the aqueous component.

The casings materials so far described are suitable for use with flexible cartridges, but other materials may be used to produce rigid cartridges for certain purposes. Suitable tubular cartridges may be made from, for example, glass, polystyrene, polycarbonate resin or thermosetting materials such as, for example, phenolic resin-bonded paper.

Other cartridges are possible where the inner component may be packaged in an inner rigid tube and the outer component in a flexible casing or *vice versa*. Suitable combinations will be apparent by due consideration of the need to maintain water resistance in any casing material which is in contact with component B of the cartridge.

The cartridges of the invention may be manufactured by simple processes using conventional extrusion and cartridge clipping equipment. Each component may be produced in a suitable mixer of a type commonly used for preparation of low viscosity or medium viscosity pastes in the paint and sealants industries. Examples of such mixers are those of the ribbon blade, Z blade or high speed disperser type.

The following Examples illustrate cementitious cartridges in accordance with the invention.

Example 1

A cementitious cartridge was made by filling in a conventional manner a length of casing of thin-gauge tubular polyethylene film (30 mm diameter) with an aqueous composition consisting of:—

|  | Parts by weight |
|---|---|
| Water | 7 |
| Limestone dust | 7 |

and embedding the filled tube within a length of tubular polyethylene film (40 mm diameter) containing a cementitious paste consisting of:—

|  | Parts by weight |
|---|---|
| High alumina cement ("Ciment Fondu") | 30 |
| Monoacetin | 8.3 |

Each resulting length of filled dual compartment cartridge, having a length of about 10 to 15 metres, was passed through a double clipping machine which forms the required sausage-shaped cartridges having an individual length of about 30 cm. by firmly clipping each end of the cartridges.

Example 2

A cementitious cartridge was made in the manner described in Example 1, except that the inner tube was filled with:—

|  | Parts by weight |
|---|---|
| Water | 8.1 |
| Limestone dust | 8.1 |

and the outer tube was filled with:—

|  | Parts by weight |
|---|---|
| High alumina cement ("Ciment Fondu") | 34.4 |
| Ethylene glycol monoacetate | 5.4 |
| Glycerol | 4.0 |

Example 3

A cementitious cartridge was made in the manner described in Example 1, except that the inner tube was filled with:—

|  | Parts by weight |
|---|---|
| Water | 8.3 |
| Calcium chloride | 0.8 |
| Limestone dust | 25 |

and the outer tube was filled with:

|  | Parts by weight |
|---|---|
| Ordinary Portland cement | 40 |
| Ethylene glycol monoacetate | 11 |

Example 4

A cementitious cartridge was made in the manner described in Example 1, except that the inner tube was filled with:—

|  | Parts by weight |
|---|---|
| Water | 39.5 |
| Calcium chloride | 12 |
| Calcined China clay | 50 |

and the outer tube was filled with:—

|  | Parts by weight |
|---|---|
| High alumina cement ("Ciment Fondu") | 34 |

| | Parts by weight |
|---|---|
| Ordinary Portland cement | 17 |
| Autoclave gypsum plaster | 15 |
| Triethylene glycol | 18 |
| Glycerol | 2 |

## Claims

1. A cementitious cartridge for anchoring a reinforcing element in a borehole, the cartridge comprising an outer tubular frangible casing having disposed therein in separate compartments a component (A) comprising a hydraulic cementitious substance and a component (B) comprising an aqueous liquid capable of reacting with the hydraulic substance when brought into contact therewith so as to cause it to set to a hardened cementitious grout capable of anchoring the reinforcing element in the borehole, characterised in that component (A) is in the form of a paste comprising the hydraulic cementitious substance and a non-aqueous water-miscible liquid which is inert with respect to the hydraulic cementitious substance.

2. A cartridge as claimed in Claim 1, wherein component (B) is contained in a tubular frangible casing which is disposed within the outer tubular frangible casing, the annular space between the inner casing and the outer casing containing component (A).

3. A cartridge as claimed in Claim 1 or 2, wherein the hydraulic cementitious substance is a Portland cement or high alumina cement.

4. A cartridge as claimed in Claim 1, 2 or 3, wherein the non-aqueous liquid is an organic compound.

5. A cartridge as claimed in Claim 4, wherein the non-aqueous liquid is an organic compound containing one or more hydroxyl groups, or an ester or partial ester of such a compound.

6. A cartridge as claimed in Claim 5, wherein the non-aqueous liquid is glycerol or a glycol.

7. A cartridge as claimed in Claim 5, wherein the non-aqueous liquid is an ester or partial ester derived from a glycol.

8. A cartridge as claimed in Claim 5, wherein the non-aqueous liquid is an ester or partial ester derived from glycerol and a lower aliphatic carboxylic acid.

9. A cartridge as claimed in any preceding claim, wherein component (A) and/or component (B) further comprise(s) a water-soluble or water-insoluble additive for controlling the physical or chemical parameters of the mixed components.

10. A cartridge as claimed in any preceding claim, wherein component (A) and/or component (B) further comprise(s) a substance capable of reducing exudation of liquid from the setting cementitious mass formed from the admixture of component (A) with component (B).

11. A cartridge as claimed in Claim 10, wherein said substance is glycerol.

## Revendications

1. Cartouche de substance analogue au ciment pour l'ancrage d'un élément renforçant dans un trou de sonde, la cartouche comprenant une enveloppe frangible tubulaire extérieure contenant dans des compartiments séparés un composant (A) constitué par une substance hydraulique analogue au ciment et un composant (B) constitué par un liquide aqueux capable de réagir avec la substance hydraulique quand il est amené en contact avec elle afin de provoquer sa prise en un coulis durci de substance analogue au ciment capable d'ancrer l'élément renforçant dans le trou de sonde, caractérisée par le fait que le composant (A) est sous la forme d'une pâte comprenant la substance hydraulique analogue au ciment et un liquide non-aqueux miscible avec l'eau qui est inerte vis-à-vis de la substance hydraulique analogue au ciment.

2. Cartouche selon la revendication 1, dans laquelle le composant (B) est enfermé dans une enveloppe frangible tubulaire qui est disposée à l'intérieur de l'enveloppe frangible tubulaire extérieure, l'espace annulaire entre l'enveloppe intérieure et l'enveloppe extérieure contenant le composant (A).

3. Cartouche selon la revendication 1 ou 2, dans laquelle la substance hydraulique analogue au ciment est un ciment Portland ou un ciment à teneur élevée en alumine.

4. Cartouche selon l'une quelconque des revendications 1, 2 et 3, dans laquelle le liquide non aqueux est un composé organique.

5. Cartouche selon la revendication 4, dans laquelle le liquide non-aqueux est un composé organique contenant un ou plusieurs groupes hydroxyle ou bien un ester ou un ester partiel d'un tel composé.

6. Cartouche selon la revendication 5, dans laquelle le liquide non-aqueux est du glycérol ou un glycol.

7. Cartouche selon la revendication 5, dans laquelle le liquide non-aqueux est un ester ou un ester partiel dérivé d'un glycol.

8. Cartouche selon la revendication 5, dans laquelle le liquide non-aqueux est un ester ou un ester partiel dérivé du glycérol et d'un acide carboxylique aliphatique inférieur.

9. Cartouche selon l'une quelconque des revendications précédentes, dans laquelle le composant (A) et/ou le composant (B) comprennent (ou comprend) encore un additif soluble dans l'eau, ou insoluble dans l'eau, pour régler les paramètres physiques, ou chimiques, des composants mélangés.

10. Cartouche selon l'une quelconque des revendications précédentes, dans laquelle le composant (A) et/ou le composant (B) comprennent (ou comprend) encore une substance capable de diminuer l'exsudation de liquide provenant de la prise de la masse analogue au ciment formée à partir du mélange du composant (A) avec le composant (B).

11. Cartouche selon la revendication 10, dans laquelle ladite substance est le glycérol.

## Patentansprüche

1. Bindungsmittelhaltige Patrone zur Verankerung eines Bewehrungsslementes in einem Bohrloch, wobei die Patrone eine äußere rohrförmige, zerbrechbare Kapsel umfaßt, in welche in voneinander getrennten Fächern eine Komponente (A) aus einem hydraulischen Bindemittel und eine Komponente (B) aus einer wässerigen Flüssigkeit, welche bei Kontakt mit dem hydraulischen Bindemittel reagiert, um eine gehärtete Bindemittelmasse zu bilden, welche das Bewehrungselemente in dem Bohrloch verankert, eingebracht sind, dadurch gekennzeichnet, daß die Komponente (A) als Paste vorliegt, die das hydraulische Bindemittel und eine nicht-wässerige mit Wasser mischbare Flüssigkeit enthält, welche gegen das hydraulische Bindemittel inert ist.

2. Patrone nach Anspruch 1, dadurch gekennzeichnet, daß die Komponente (B) in einer rohrförmigen zerbrechbaren Kapsel enthalten ist, die innerhalb der äußeren rohrförmigen, zerbrechbaren Kapsel angeordnet ist, wobei der ringförmige Zwischenraum zwischen der inneren Kapsel und der äußeren Kapsel die Komponente (A) enthält.

3. Patrone nach Anspruch 1 oder 2, dadurch gekennzeichnet, daß das hydraulische Bindemittel ein Portlandzement oder ein Al-reicher Zement ist.

4. Patrone nach einem der Ansprüche 1 bis 3, dadurch gekennzeichnet, daß die nicht-wässerige Flüssigkeit eine organische Verbindung ist.

5. Patrone nach Anspruch 4, dadurch gekennzeichnet, daß die nicht-wässerige Flüssigkeit eine organische Verbindung mit einer oder mehreren Hydroxylgruppen oder deren Ester oder Partialester ist.

6. Patrone nach Anspruch 5, dadurch gekennzeichnet, daß die nicht-wässerige Flüssigkeit Glyzerin oder ein Glykol ist.

7. Patrone nach Anspruch 5, dadurch gekennzeichnet, daß die nicht-wässerige Flüssigkeit ein Ester oder Partialester eines Glykols ist.

8. Patrone nach Anspruch 5, dadurch gekennzeichnet, daß die nicht-wässerige Flüssigkeit ein Ester oder Partialester von Glycerin und einer niedrigen aliphatischen Carbonsäure ist.

9. Patrone nach einem der Ansprüche 1 bis 8, dadurch gekennzeichnet, daß die Komponente (A) und/oder die Komponente (B) weiters einen wasserlöslichen oder wasserunlöslichen Zusatz enthalten zur Regelung der physikalischen oder chemischen Parameter der gemischten Komponenten.

10. Patrone nach einem der Ansprüche 1 bis 9, dadurch gekennzeichnet, daß die Komponente (A) und/oder die Komponente (B) zusätzlich einen Stoff zur Herabsetzung des Ausschwitzens von Flüssigkeit aus dem aushärtenden Bindemittel, das such durch Mischen der Komponente (A) mit der Komponente (B) gebildet hat, enthalten.

11. Patrone nach Anspruch 10, dadurch gekennzeichnet, daß der Stoff Glyzerin ist.